# EUROPÄISCHE PATENTSCHRIFT

(11) **EP 2 526 152 B1**
(45) Veröffentlichungstag und Bekanntmachung des Hinweises auf die Patenterteilung: **08.01.2014**
(21) Anmeldenummer: 11700528.0
(22) Anmeldetag: 12.01.2011
(51) Int. Cl.: C08L 77/00, C08L 77/02, C08L 25/12, C08J 3/00, C08L 55/02, C08L 51/04, C08L 35/06, C08K 5/1539, C08K 7/02

(54) **VERFAHREN ZUR HERSTELLUNG VON THERMOPLASTISCHEN FORMMASSEN AUF BASIS VON STYROLCOPOLYMEREN UND POLYAMID MIT VERBESSERTER ZÄHIGKEIT**
METHOD FOR PRODUCING THERMOPLASTIC MOLDING COMPOUNDS ON THE BASIS OF STYRENE COPOLYMERS AND POLYAMIDE HAVING IMPROVED VISCOSITY
PROCÉDÉ DE PRODUCTION DE MATIÈRES MOULABLES THERMOPLASTIQUES À BASE DE COPOLYMÈRES DE STYRÈNE ET DE POLYAMIDE À TÉNACITÉ AMÉLIORÉE

(30) Priorität: 18.01.2010 EP 10150933
(43) Veröffentlichungstag der Anmeldung: 28.11.2012
(73) Patentinhaber: Styrolution GmbH, 60325 Frankfurt (DE)
(72) Erfinder: WEBER, Martin, 67487 Maikammer (DE); BLINZLER, Marko, 68163 Mannheim (DE); GÜNTHERBERG, Norbert, 67346 Speyer (DE)
(74) Vertreter: Jacobi, Markus Alexander
(86) Internationale Anmeldenummer: PCT/EP2011/050294
(87) Internationale Veröffentlichungsnummer: WO 2011/086074

(56) Entgegenhaltungen:
- EP-A2- 0 402 528
- WO-A1-2008/101888
- DE-A1-102005 036 981

## Beschreibung

Die Erfindung betrifft Verfahren zur Herstellung von thermoplastischen Formmassen, wobei die thermoplastischen Formmassen enthalten
a) 3 bis 79 Gew.-% eines oder mehrerer (Methyl)Styrol-Acrylnitril-Copolymere, die keine von Maleinsäureanhydrid abgeleiteten Einheiten aufweisen, als Komponente A,
b) 15 bis 91 Gew.-% eines oder mehrerer Polyamide als Komponente B,
c) 5 bis 50 Gew.-% eines oder mehrerer Kautschuke als Komponente C,
d) 1 bis 25 Gew.-% eines oder mehrerer Verträglichkeitsvermittler als Komponente D,
e) 0 bis 2 Gew.-% einer oder mehrerer niedermolekularer Verbindungen, die eine Dicarbonsäureanhydridgruppe enthalten, als Komponente E,
f) 0 bis 50 Gew.-% eines oder mehrerer faser- oder teilchenförmiger Füllstoffe als Komponente F und
g) 0 bis 40 Gew.-% weitere Zusatzstoffe als Komponente G,
wobei die Gew.-% jeweils auf das Gesamgewicht der Komponenten A bis G bezogen sind und zusammen 100 Gew.-% ergeben,
durch Schmelzevermischung der Komponenten A bis G,
dadurch gekennzeichnet, dass in einem Schneckenextruder, der entlang der Förderrichtung in dieser Reihenfolge mindestens eine Dosierzone, eine Plastifizierzone, eine Homogenisierzone und eine Austragszone umfasst, nach Zugabe der Komponenten A, B und C in die Dosierzone in einem ersten Verfahrensschritt in Abwesenheit von Komponente D eine Schmelze erzeugt wird, und in einem zweiten Verfahrenschritt nach Zugabe der Komponente D in die Homogenisierzone das Einmischen der Komponente D in diese Schmelze durchgeführt wird,
sowie thermoplastische Formmassen, die nach diesen Verfahren erhältlich sind, die Verwendung dieser thermoplastischen Formmassen zur Herstellung von Formkörpern, Folien oder Fasern sowie Formkörper, Fasern und Folien, die diese thermoplastischen Formmassen enthalten.

Polymere Blends aus (Methyl)Styrol-Acrylnitril-Copolymeren und Polyamiden sind an sich bekannt. Binäre Blends aus diesen Polymerkomponenten weisen aufgrund der Unverträglichkeit zwischen Polyamid und beispielsweise Styrol-Acrylnitril-Copolymer sehr schlechte Zähigkeiten auf. Durch Einsatz von Verträglichkeitsvermittlern kann die Zähigkeit der Blends, aber auch deren Chemikalienresistenz, signifikant verbessert werden, wie beispielsweise beschrieben in EP 202 214 B1, EP 402 528 A2 DE 10 2005 036981 A1, WO 2008/101888 und EP 784 080 B1. Die Mischreihenfolge der Polymerkomponenten und Verträglichkeitsvermittler bei der Herstellung der Blends aus (Methyl)Styrol-Acrylnitril-Copolymeren und Polyamiden wird in den genannten Schriften als grundsätzlich beliebig beschrieben, in der Regel werden alle Komponenten gemeinsam einer Mischvorrichtung zugeführt, d.h. in einem einzigen Verfahrensschritt zeitgleich miteinander schmelzevermischt. Als Verträglichkeitsvermittler eignen sich vor allem Styrol-Acrylnitril-Maleinsäureanhydrid-Terpolymere, Styrol-N-Phenylmaleinimid-Maleinsäureanhydrid-Terpolymere und Methylmethacrylat-Maleinsäureanhydrid-Copolymere. Es wird davon ausgegangen, dass die Amino- bzw. Carboxylendgruppen der Polyamide mit den funktionellen Gruppen der genannten Co- und Terpolymere reagieren, wobei in situ Copolymere entstehen, welche die Verträglichkeit zwischen der Styrolcopolymerphase und der Polyamidphase herstellen.

Dennoch gibt es eine Reihe von Anwendungen, für die das Zähigkeitsniveau bekannter Mischungen aus (Methyl)Styrol-Acrylnitril-Copolymeren und Polyamiden nicht zufriedenstellend ist. Außerdem ist der Anteil flüchtiger Komponenten in den bekannten Mischungen bei vielen Anwendungen nachteilig.

Aufgabe der vorliegenden Erfindung ist es daher, thermoplastische Formmassen auf Basis schlagzähmodifizierter (Methyl)Styrol-Acrylnitril-Copolymere und Polyamiden bereit zu stellen, die gegenüber bekannten Formmassen dieser Art eine weiter verbesserte Schlagzähigkeit und/oder einen geringeren Anteil flüchtiger Komponenten aufweisen.

Demgemäß wurden die eingangs genannten Verfahren gefunden, wobei erfindungswesentlich ist, daß in einem ersten Verfahrensschritt in Abwesenheit von Komponente D eine Schmelze enthaltend die Komponenten A, B und C hergestellt wird, und erst in einem anschließenden zweiten Verfahrensschritt das Einmischen der Komponente D in diese Schmelze erfolgt.

Weiterhin wurden thermoplastische Formmassen, die nach diesen Verfahren erhältlich sind, die Verwendung dieser thermoplastischen Formmassen sowie Formkörper, Fasern und Folien, die diese thermoplastischen Formmassen enthalten, gefunden.

Die nach den erfindungsgemäßen Verfahren herstellbaren thermoplastischen Formmassen weisen gegenüber bekannten Formmassen auf Basis schlagzähmodifizierter (Methyl)Styrol-Acrylnitril-Copolymere und Polyamide eine weiter verbesserte Schlagzähigkeit und/oder einen geringeren Anteil flüchtiger Komponenten auf.

Die erfindungsgemäßen Verfahren und Gegenstände werden im folgenden beschrieben.

Die nach den erfindungsgemäßen Verfahren herstellbaren thermoplastischen Formmassen umfassen
a) 3 bis 79 Gew.-%, bevorzugt 5 bis 55 Gew.-%, besonders bevorzugt 10 bis 25 Gew.-%, Komponente A,
b) 15 bis 91 Gew.-%, bevorzugt 25 bis 78 Gew.-%, besonders bevorzugt 35 bis 60 Gew.-%, Komponente B,
c) 5 bis 50 Gew.-%, bevorzugt 15 bis 45 Gew.-%, besonders bevorzugt 25 bis 40 Gew.-% Komponente C,
d) 1 bis 25 Gew.-%, bevorzugt 2 bis 15 Gew.-%, besonders bevorzugt 3 bis 7 Gew.-% Komponente D,
e) 0 bis 2 Gew.-%, bevorzugt 0 bis 1 Gew.-%, besonders bevorzugt 0 bis 0,5 Gew.-% Komponente E,
f) 0 bis 50 Gew.-%, bevorzugt 0 bis 38 Gew.-%, besonders bevorzugt 0 bis 27 Gew.-% Komponente F, und
g) 0 bis 40 Gew.-%, bevorzugt 0 bis 10 Gew.-%, besonders bevorzugt 0 bis 5 Gew.-% Komponente G, und
wobei die Gew.-% jeweils bezogen sind auf das Gesamtgewicht der Komponenten A bis G und zusammen 100 Gew.-% ergeben.

### Komponente A

Als Komponente A enthalten die erfindungsgemäßen thermoplastischen Formmassen ein oder mehrere (Methyl)Styrol-Acrylnitril-Copolymere, die keine von Maleinsäureanhydrid abgeleiteten Einheiten aufweisen. Unter (Methyl)Styrol-Acrylnitril-Copolymeren sind alle Copolymere zu verstehen, die durch Copolymerisation ein oder mehrerer vinylaromatischer Monomere, bevorzugt Styrol und/oder α-Methylstyrol, mit Acrylnitril erhältlich sind; dabei können in den Copolymeren neben den genannten Monomeren beliebige andere geeignete und von Maleinsäureanhydrid verschiedene Monomere vorliegen. Bevorzugt handelt es sich bei Komponente A um ein Styrol-Acrylnitril-Copolymer und/oder ein α-Methylstyrol-Acrylnitril-Copolymer. (Methyl)Styrol-Acrylnitril-Copolymere und deren Herstellung sind dem Fachmann bekannt und in der Literatur beschrieben.

Bevorzugte Komponenten A sind aufgebaut aus 50 bis 90 Gew.-%, bevorzugt 60 bis 80 Gew.-%, insbesondere 65 bis 78 Gew.-%, vinylaromatischer Monomere, insbesondere Styrol und/oder α-Methylstyrol, und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Als oben genannte weitere Monomere sind alle copolymerisierbaren und von Maleinsäureanhydrid verschiedene Monomere einsetzbar, beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach an sich bekannten Methoden herstellen. Sie lassen sich z. B. durch radikalische Polymerisation, insbesondere durch Emulsions-, Suspensions-, Lösungs- oder Massepolymerisation herstellen.

Die Komponente A ist bevorzugt kautschukfrei.

### Komponente B

Als Komponente B enthalten die erfindungsgemäßen thermoplastischen Formmassen ein oder mehrere Polyamide. Polyamide und deren Herstellung sind dem Fachmann bekannt und in der Literatur beschrieben (s. beispielsweise WO 95/28443, WO 99/41297 und DE-A 198 12 135).

Unter Polyamiden werden Homopolymere oder Copolymere verstanden, die als wesentlichen Bestandteil wiederkehrend Amid-Gruppen in der Polymer-Hauptkette aufweisen. Beispiele solcher Polyamide sind Polyamid 6 (Polycaprolactam), Polyamid 6,6 (Polyhexamethylenadipamid), Polyamid 4,6 (Polytetramethylenadipamid), Polyamid 5,10 (Polypentamethylenadipamid), Polyamid 6,10 (Polyhexamethylensebacamid), Polyamid 7 (Polyenantholactam), Polyamid 11 (Polyundecanolactam), Polyamid 12 (Polydodecanolactam). Bevorzugt wird als Komponente B Polyamid 6 eingesetzt.

In einer weiteren bevorzugten Ausführungsform wird als Komponente B ein Polyamid eingesetzt, welches, bezogen auf die gesamte Komponente B, 0,01 bis 1 Gew.-%, bevorzugt 0,05 bis 0,5 Gew.-%, insbesondere 0,1 bis 0,2 Gew.-%, sich von Triacetondiamin (TAD) ableitenden Endgruppen enthält.

Es ist auch möglich, Polyamide zu verwenden, die durch Copolykondensation von zwei oder mehr der oben genannten Monomeren oder ihrer Komponenten hergestellt worden sind, z. B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten bevorzugt 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden. Ein bevorzugtes teilaromatisches Polyamid ist Polyamid 9T, das sich von Nonandiamin und Terephthalsäure ableitet. Die Herstellung der teilaromatischen Copolyamide kann z. B. nach dem in den EP-A-129 195 und EPA-129 196 beschriebenen Verfahren erfolgen.

### Komponente C

Die erfindungsgemäß herstellbaren thermoplastischen Formmassen enthalten als Komponente C einen oder mehrere Kautschuke. Geeignet sind grundsätzlich alle dem Fachmann bekannten kautschukelastischen Polymerisate oder Elastomere. Beispielsweise eignen sich Pfropfkautschuke auf Basis von Butadien, beispielsweise Butadien/Styrol und EPDM (Ethylen-Propylen-Dien-Kautschuke), oder Alkylacrylaten. Diese kautschukelastischen Polymerisate haben in der Regel eine Glasübergangstemperatur Tg ≤ 0 °C.

Als Kautschuke C sind im Rahmen der vorliegenden Erfindung insbesondere solche geeignet, die
- einen Dienkautschuk auf Basis von Dienen, wie z. B. Butadien oder Isopren,
- einen Alkylacrylatkautschuk auf Basis von Alkylestern der Acrylsäure, wie n-Butylacrylat und 2-Ethylhexylacrylat,
- einen EPDM-Kautschuk auf Basis von Ethylen, Propylen und einem Dien,
- einen Siliconkautschuk auf Basis von Polyorganosiloxanen,
oder Mischungen dieser Kautschuke bzw. Kautschukmonomeren enthalten.

Besonders bevorzugt ist als Kautschuk C ein Pfropfpolymerisat aus einer Pfropfgrundlage, insbesondere einer vernetzten Dien- oder Alkylacrylatpfropfgrundlage, und einer oder mehrerer Pfropfhüllen, insbesondere einer oder mehrerer Styrol-, Acrylnitril- oder Methylmethacrylat-Pfropfhüllen.

Verfahren zur Herstellung der kautschukelastischen Polymerisate sind dem Fachmann bekannt und in der Literatur beschrieben.

### Komponente D

Als Komponente D enthalten die nach den erfindungsgemäßen Verfahren herstellbaren thermoplastischen Formmassen einen oder mehrere Verträglichkeitsvermittler. Solche für Mischungen von (Methyl)Styrol-Acrylnitril-Copolymeren und Polyamiden geeigneten Verträglichkeitsvermittler sind dem Fachmann bekannt und in der Literatur beschrieben.

Als Verträglichkeitsvermittler bevorzugt einsetzbare Komponenten D sind (Methyl)Styrol-Acrylnitril-Copolymere, die, bezogen auf die gesamte Komponente D, 0,5 bis 5 Gew.-% von Maleinsäureanhydrid abgeleitete Einheiten aufweisen. Bevorzugt beträgt dieser Maleinsäureanhydridanteil 1 bis 3 Gew.-%, insbesondere 2,0 bis 2,2 Gew.-%. Grundsätzlich können auch weitere Monomerkomponenten, insbesondere N-Phenylmaleinimid, enthalten sein.

Besonders bevorzugt ist Komponente D ein Styrol-Acrylnitril-Maleinsäureanhydrid-Terpolymer. Im Terpolymer beträgt der Anteil an Acrylnitril, bezogen auf das gesamte Terpolymer, vorzugsweise 10 - 30 Gew.-%, besonders bevorzugt 15 - 30 Gew.-%, insbesondere 20 - 25 Gew.-%, der Anteil an von Maleinsäureanhydrid abgeleiteten Einheiten entspricht den vorstehend genannten Mengen. Der verbleibende Rest entfällt auf Styrol.

Die bevorzugt einsetzbaren maleinsäureanhydridhaltigen (Methyl)Styrol-Acrylnitril-Copolymere haben im allgemeinen Molekulargewichte Mw im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

### Komponente E

Als weitere Komponente E kann eine niedermolekulare Verbindung mitverwendet werden, die nur eine Dicarbonsäureanhydridgruppe aufweist. Niedermolekulare Verbindunen im Sinne der vorliegenden Erfindungen sind solche mit einem Molekulargewicht von weniger als 1000 g/mol. Es können aber auch zwei oder mehr dieser Verbindungen als Komponente E verwendet werden. Diese Verbindungen können neben der Dicarbonsäureanhydridgruppe weitere funktionelle Gruppen enthalten, die mit den Endgruppen der Polyamide reagieren können. Geeignete Verbindungen E sind z.B. C₄-bis C₁₀-Alkyldicarbonsäureanhydride, beispielsweise Bernsteinsäureanhydrid, Glutarsäureanhydrid, Adipinsäureanhydrid. Ferner kommen cycloaliphatische Dicarbonsäureanhydride wie 1,2-Cyclohexandicarbonsäureanhydrid in Betracht. Darüber hinaus können aber auch Dicarbonsäureanhydride, die ethylenisch ungesättigte oder aromatische Verbindungen sind, eingesetzt werden, z.B. Maleinsäureanhydrid, Phthalsäureanhydrid, Trimellitsäureanhydrid oder deren Mischungen. Die als Komponente E einsetzbaren Verbindungen sowie deren Herstellung sind dem Fachmann bekannt und in der Literatur beschrieben.

### Komponente F

Als Komponente F können die erfindungsgemäßen thermoplastischen Formmassen einen oder mehrere faser- oder teilchenförmige Füllstoffe enthalten. Bevorzugte faserförmige Füll- oder Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit Schlichte und einem Haftvermittler ausgerüstet sein. Im Allgemeinen haben die verwendeten Kohlenstoff- und Glasfasern einen Durchmesser im Bereich von 6 - 20 µm. Die Einarbeitung der Glasfasern kann sowohl in Form von Kurzglasfasern als auch in Form von Langglasfasern oder Endlossträngen erfolgen, beispielsweise auch in Form von sogenannten Rovings. Im fertigen Spritzgussteil liegt die mittlere Länge der Glasfasern vorzugsweise im Bereich von 0,08 - 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talcum, Feldspat, Glaskugeln und insbesondere Calciumsilicate wie Wollastonit und Kaolin (insbesondere kalzinierter Kaolin).

Besonders bevorzugte Kombinationen von Füllstoffen sind solche aus Glasfasern und Wollastonit.

### Komponente G

Als Komponente G können die erfindungsgemäß herstellbaren thermoplastischen Formmassen ein oder mehrere weitere Zusatzstoffe enthalten. Geeignet sind grundsätzlich alle dem Fachmann bekannten und in der Literatur beschriebenen kunststoffüblichen Zusatzstoffe. Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Oxidationsverzögerer und Wärmestabilisatoren sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen, einsetzbar. Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen eingesetzt werden.

Gleit- und Entformungsmittel, die in der Regel in Mengen bis zu 1 Gew.-%, bezogen auf das Gewicht der thermoplastischen Formmassen, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet ist insbesondere Calciumstearat.

### Herstellverfahren

Nach den erfindungsgemäßen Verfahren wird in einem ersten Verfahrensschritt in Abwesenheit von Komponente D eine Schmelze enthaltend die Komponenten A, B und C hergestellt, und erst in einem anschließenden zweiten Verfahrensschritt das Einmischen der Komponente D in diese Schmelze durchgeführt. Falls eine oder mehrere Komponenten E, F oder G zugemischt werden sollen, kann dies im ersten Verfahrensschritt oder im zweiten Verfahrensschritt oder auch in beiden Verfahrensschritten erfolgen. Selbstverständlich ist es grundsätzlich auch möglich, im ersten Verfahrensschritt nicht die Gesamtmenge der Komponenten A, B, und C einzusetzen, sondern eine Teilmenge dieser Komponenten erst im zweiten Verfahrensschritt in die Schmelze zu dosieren.

Die Komponente D kann bevorzugt als Feststoff, insbesondere Granulat, grundsätzlich aber auch in schmelzförmigem oder gelöstem Zustand zur Schmelze enthaltend die Komponenten A, B, C und ggf. E, F und G zugegeben werden.

Die im ersten Verfahrensschritt in Abwesenheit der Komponente D erfolgende Herstellung der Schmelze enthaltend die Komponenten A, B, C und ggf. E, F und G erfolgt nach dem Fachmann bekannten Verfahren, beispielsweise durch Vermischung einer Schmelze der Komponente A mit den weiteren Komponenten B und C und/oder ggf. E, F und G mit dem Fachmann bekannten Schneckenextruder, vorzugsweise bei Temperaturen im Bereich von 220 bis 300°C, insbesondere von 230 bis 290°C. Die Komponenten können in jeweils reiner Form den Mischvorrichtungen zugeführt werden. Es können aber auch einzelne Komponenten zuerst vorgemischt und anschließend mit den anderen Komponenten vermischt werden.

Nach den erfindungsgemäßen Verfahren wird im zweiten Verfahrensschritt die Komponente D in die nach dem ersten Verfahrensschritt erhaltenene Schmelze eingemischt (es können im zweiten Verfahrensschritt auch Teilmengen der Komponenten A, B und C eingemischt werden, die noch nicht im ersten Verfahrensschritt eingemischt wurden). Das Einmischen der Komponente D erfolgt nach dem Fachmann bekannten und oben bereits beschriebenen Verfahren, durch Schmelzevermischung in Schneckenextrudern. Die mittlere Mischzeit zum Erreichen einer homogenen Mischung beträgt unabhängig voneinander sowohl im ersten als auch im zweiten Verfahrensschritt in der Regel zwischen 5 sec und 30 min.

Dabei erfolgt die Herstellung der thermoplastischen Formmassen durch Schmelzevermischung in einem Schneckenextruder, der entlang der Förderrichtung in dieser Reihenfolge mindestens eine Dosierzone, eine Plastifizierzone, eine Homogenisierzone und eine Austragszone umfaßt, wobei nach Zugabe der Komponenten A, B und C in die Dosierzone in einem ersten Verfahrensschritt in Abwesenheit von Komponente D eine Schmelze erzeugt wird, und in einem zweiten Verfahrenschritt nach Zugabe der Komponente D in die Homogenisierzone das Einmischen der Komponente D in diese Schmelze durchgeführt wird.

Geeignete Schneckenextruder sind beispielsweise in Saechtling, Kunststoff-Taschenbuch, Hanser Verlag, München, Wien, Ausgabe 26, 1995, Seiten 191 bis 246, beschrieben.

Schneckenextruder weisen üblicherweise Abschnitte unterschiedlicher Funktion, sogenannte "Zonen" auf (s. beispielsweise Kohlgrüber, Der gleichläufige Doppelschneckenextruder, Carl Hanser Verlag. München, 2007, S. 61-75). Die unterschiedlichen Zonen der Schneckenextruder sind nicht notwendigerweise identisch mit den einzelnen Bauteilen wie Gehäuseteilen oder Schneckensegmenten, aus denen die Schneckenextruder montiert sind. Eine Zone besteht in der Regel aus mehreren Bauteilen. Die einzelnen Zonen können je nach Funktion unterschiedliche räumliche Ausdehnungen, beispielsweise unterschiedliche Längen oder Volumina, haben.

Üblicherweise weisen Schneckenextruder eine oder mehrere der im folgenden beschriebenen Zonen auf. Darüberhinaus können Schneckenextruder aber auch Zonen aufweisen, deren Funktion im folgenden nicht explizit beschrieben wird.

Unter Dosierzone ist der Abschnitt eines Schneckenextruders zu verstehen, in dem eine oder mehrere Komponenten, beispielsweise ein thermoplastisch verarbeitbares Polymer, dem Schneckenextruder zugeführt werden. Diese Zuführung kann mit einer Dosiereinrichtung erfolgen, die beispielsweise aus einer obenliegenden Öffnung in dem Schneckenextruder mit aufgesetztem Trichter besteht, so daß die zu dosierende Komponente durch Schwerkraft in den Schneckenextruder gelangt. Die Dosiereinrichtung kann aber auch beispielsweise aus einer Förderschnecke oder einem Extruder bestehen, durch die die zu dosierende Komponente durch die Dosieröffnung des Schneckenextruders gedrückt wird.

Unter Plastifizierzone (oftmals auch als Aufschmelzzone bezeichnet) ist der Abschnitt eines Schneckenextruders zu verstehen, in dem eine Komponente, insbesondere Komponenten A, B und C, in einen warmformbaren, meist schmelzflüssigen oder plastisch verformbaren, Zustand gebracht wird. In der Regel wird dies durch Beheizen oder mechanisch eingebrachte Energie erreicht. Zum Einbringen mechanischer Energie kommen als Plastifizierungselemente die dem Fachmann geläufigen Bauteile in Betracht, beispielsweise Schneckenelemente mit geringer Steigung in Förderrichtung, Schneckenelemente mit einer Steigung entgegen der Förderrichtung, Knetblöcke mit fördernder, neutraler oder rückfördernder Steigung, oder eine Kombination solcher Elemente. Die Auswahl der Plastifizierungselemente in der Plastifizierzone richtet sich hinsichtlich ihrer Art, Anzahl und Dimensionierung nach den Komponenten der thermoplastischen Formmassen, insbesondere nach der Viskosität und Erweichungstemperatur sowie der Mischbarkeit der Komponenten.

Unter Homogenisierzone ist der Abschnitt eines Schneckenextruders zu verstehen, in dem eine oder mehrere Komponenten, von denen mindestens eine im warmformbaren Zustand ist, homogenisiert werden. Diese Homogenisierung erfolgt meist durch Mischen, Kneten oder Scheren. Geeignete Misch-, Knet- und Scherelemente sind beispielsweise Knetblöcke mit schmalen oder breiten, fördernden oder nichtfördemden Knetscheiben.

Unter Austragszone ist der Abschnitt eines Schneckenextruders zu verstehen, in dem der Austrag der thermoplastisch verarbeitbaren Formmasse aus dem Schneckenextruder vorbereitet und durch die Austrittsöffnung durchgeführt wird. Die Austragszone besteht meist aus einer Förderschnecke und einem geschlossenen Gehäuseteil, das mit einer definierten Austrittsöffnung abgeschlossen ist.

Bevorzugt wird als Austrittsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert.

Sofern die thermoplastisch verarbeitbare Formmasse nicht erst als Granulat erhalten, sondern direkt weiterverwendet werden soll, ist auch die Weiterverarbeitung im heißen Zustand oder die Direktextrusion von Platten, Folien, Rohren und Profilen vorteilhaft.

Ein Schneckenextruder kann darüberhinaus weitere Zonen enthalten, beispielsweise Entlüftungs- oder Entgasungszonen zum Abführen gasförmiger Bestandteile oder Abquetsch- und Entwässerungszonen zum Abtrennen und Austragen flüssiger Bestandteile, bei denen es sich um Wasser, aber auch um andere Stoffe handeln kann. Entgasungs-, Abquetsch- und Entwässerungszonen sowie deren apparative Ausführung und Anordnung sind in WO 98/13412 beschrieben, weshalb bezüglich dieser Merkmale ausdrücklich auf die genannte Schrift verwiesen wird.

Die einzelnen Zonen können räumlich voneinander klar abgrenzbar sein oder kontinuierlich ineinander übergehen. So ist beispielsweise bei einem Extruder der Übergang von der Plastifizierzone in die Homogenisierzone räumlich nicht immer klar abgrenzbar. Es findet oftmals ein kontinuierlicher Übergang zwischen den beiden Zonen statt.

Wie allgemein bekannt ist, können die verschiedenen Zonen eines Schneckenextruders individuell geheizt oder gekühlt werden, um entlang der Förderrichtung ein optimales Temperaturprofil einzustellen. Geeignete Heiz- und Kühleinrichtungen sind dem Fachmann bekannt.

Die im Einzelfall zu wählenden Temperaturen und räumlichen Abmessungen der einzelnen Zonen unterscheiden sich in Abhängigkeit der chemischen und physikalischen Eigenschaften der Komponenten und deren Mengenverhältnissen. So liegen z.B. die Mischtemperaturen in der Homogenisierzone in der Regel zwischen 100°C und 400°C, bevorzugt bei 200 bis 320°C.

Als Schneckenextruder können Einschneckenextruder oder Doppelschneckenextruder, die gleichsinnig drehend und ineinandergreifend, als auch gegenläufig kämmend sowie nicht kämmend sein können, verwendet werden. Bevorzugt werden Doppelschneckenextruder eingesetzt. Besonders bevorzugt sind gleichsinnig drehende, kämmende Doppelschneckenextruder.

Es können Extruder mit Schnecken mit kleiner, mittlerer oder großer Gangtiefe (sog. "tiefgeschnittene Schnecken") verwendet werden. Die Gangtiefe der einzusetzenden Schnecken ist maschinentypabhängig. Der jeweils einzusetzende Maschinentyp richtet sich nach der jeweiligen Aufgabe.

Die Gangzahl der Schnecken des Extruders kann variieren. Bevorzugt werden zweigängige Schnecken verwendet. Jedoch können auch Schnecken mit anderen Gangzahlen, beispielsweise eingängige oder dreigängige, eingesetzt werden, oder solche Schnecken, die Abschnitte mit unterschiedlichen Gangzahlen aufweisen.

Die Schneckendrehzahlen des Extruders können innerhalb eines weiten Bereiches variieren. Bevorzugt werden relativ hohe Drehzahlen verwendet. Geeignete Drehzahlen liegen im Bereich von 50 bis 1800 U/min⁻¹, bevorzugt von 100 bis 1000 U/min⁻¹, besonders bevorzugt 200 bis 900 U/min⁻¹.

In einer bevorzugten Ausführungsform der erfindungsgemäßen Verfahren wird zur Schmelzevermischung der Komponenten A, B, C, D und ggf. E, F und G ein Schneckenextruder eingesetzt, der eine Baulänge L aufweist, wobei die Baulänge L definiert ist als die Strecke beginnend bei der ersten Dosiereinrichtung für die Zugabe der Komponenten A, B und/oder C und in Förderrichtung endend bei der Austrittsöffnung des Extruders. Die Zugabe der Komponenten A, B und C erfolgt bevorzugt im Bereich von 0 L bis 0,15 L, wobei in einem ersten Verfahrensschritt in Abwesenheit von Komponente D eine Schmelze erzeugt wird. Die im zweiten Verfahrensschritt nachfolgende Zugabe der Komponente D und das Einmischen in die Schmelze enthaltend die Komponenten A, B und C erfolgt bevorzugt im Bereich von 0,3 L bis 0,99 L, besonders bevorzugt im Bereich von 0,35 L bis 0,9 L, insbesondere im Bereich von 0,4 L bis 0,7L. Ungeachtet der Bezeichnungen "erster Verfahrensschritt" und "zweiter Verfahrensschritt", die der Klarstellung dienen, daß das Erzeugen der Schmelze enthaltend die Komponenten A, B und C einerseits und das Einmischen der Komponente D andererseits zwei zeitlich und/oder räumlich separierte Vorgänge sind, wird der Extruder selbstverständlich kontinuierlich und bevorzugt in einem stationären Zustand betrieben.

Die erfindungsgemäßen thermoplastischen Formmassen können zur Herstellung von Formkörpern, Fasern und Folien verwendet werden. Insbesondere werden sie zur Herstellung von Formkörpern eingesetzt, z. B. für Kfz-Bauteile oder in Elektronikgeräten.

Die nach den erfindungsgemäßen Verfahren herstellbaren thermoplastischen Formmassen weisen gegenüber bekannten Formmassen auf Basis schlagzähmodifizierter (Methyl)Styrol-Acrylnitril-Copolymere und Polyamide eine weiter verbesserte Schlagzähigkeit und/oder einen geringeren Anteil flüchtiger Komponenten auf.

Die Erfindung wird durch die nachstehenden Beispiele näher erläutert.

### Beispiele

### Meßmethoden

Die Viskositätszahlen VZ der (Methyl)Styrol-Acrylnitril-Copolymere und Verträglichkeitsvermittler wurden nach DIN 53727 an 0,5 gew.-%iger Dimethylformamid-Lösung bei 25 °C bestimmt.

Die Viskositätszahlen VZ der Polyamide wurden nach DIN 53727 an 0,5 gew.-%iger Lösung in konzentrierter Schwefelsäure (96 Gew.-% H₂SO₄)) bei 25 °C bestimmt.

Die mittleren Teilchengrößen der als Kautschuke eingesetzten Pfropfcopolymere wurden als Gewichtsmittel der Teilchengrößen mittels einer analytischen Ultrazentrifuge entsprechend der Methode von W. Scholtan und H. Lange, Kolloid-Z, und Z.-Polymere 250 (1972), Seiten 782 bis 796, bestimmt.

Die Wärmeformbeständigkeit Vicat B der thermoplastischen Formmassen wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Schlagzähigkeit aₙ der thermoplastischen Formmassen bei Raumtemperatur (RT) und -30°C wurde an ISO-Stäben nach ISO 179 1 eU bestimmt.

Die Kerbschlagzähigkeit aₖ der thermoplastischen Formmassen bei Raumtemperatur (RT) und -30°C wurde an ISO-Stäben nach ISO 179 1 eA bestimmt.

Die Fließfähigkeit MVI wurde nach ISO 1133 bei 240 °C und 10 kg Belastung bestimmt.

Der Anteil flüchtiger Verbindungen in den thermoplastischen Formmassen wurde als Gesamt-C-Emission nach VDA 277 bestimmt.

### Einsatzstoffe:

### Komponente A-1

Copolymer aus 75 Gew.-% Styrol und 25 Gew.-% Acrylnitril, charakterisiert durch eine Viskositätszahl VZ von 80 ml/g.

### Komponente B-1

Ultramid^{®} B27 der BASF SE, ein Polyamid 6 erhalten aus ε-Caprolactam mit einer Viskositätszahl von 150 ml/g.

### Komponente B-2

Polyamid 6, erhalten aus ε-Caprolactam, mit einem Anteil von Triacetondiamin von 0,16 Gew.-% und mit einer Viskositätszahl von 130 ml/g.

### Komponente C-1

Partikelförmiges Pfropfcopolymer bestehend aus 62 Gew.-% einer Pfropfgrundlage aus Polybutadien und 38 Gew.-% einer Pfropfhülle aus 75 Gew.-% Styrol und 25 Gew.-% Acrylnitril, mit einer mittleren Teilchengröße von 400 nm.

### Komponente C-2

Partikelförmiges Pfropfcopolymer bestehend aus 70 Gew.-% einer Pfropfgrundlage aus Polybutadien und 30 Gew.-% einer Pfropfhülle aus 75 Gew.-% Styrol und 25 Gew.-% Acrylnitril, mit einer mittleren Teilchengröße von 370 nm.

### Komponente D-1

Terpolymer aus 74,4 Gew.-% Styrol, 23,5 Gew.-% Acrylnitril und 2,1 Gew.-% Maleinsäureanhydrid mit einer Viskositätszahl VZ von 66 ml/g.

### Komponente E-1

### Phthalsäureanhydrid

### Komponente F-1

Schnittglasfaser mit Polyurethanschlichte und einem Faserdurchmesser von 14 µm.

### Komponente G-1

Irganox^{®} PS 802 der BASF SE, ein Distearyl-dithiopropionat.

Herstellung der thermoplastischen Formmassen und Bestimmung ihrer Eigenschaften:
Die in Tabellen 1 und 2 genannten Mengen der Komponenten A-G wurden in die jeweils in Tabellen 1 und 2 genannten Bereiche 0 bis 9 eines kontinuierlich betriebenen und im stationären Zustand befindlichen Zweiwellenextruders dosiert (die Baulänge L des Extruders betrug das zehnfache des Schneckendurchmessers (10 D) und unterteilte sich in 10 jeweils gleich lange Bereiche der Länge 0,1 L, wobei die einzelnen Bereiche in Förderrichtung fortlaufend nummeriert wurden, beginnend bei Bereich 0 und endend mit Bereich 9). Die Gehäusetemperatur des Extruders betrug 240 bis 260°C. Die aus dem Extruder ausgetragene Schmelze wurde durch ein Wasserbad geleitet und granuliert. An diesem Granulat bzw. daraus spritzgegossenen Probekörpern wurden die in Tabelle 1 genannten Eigenschaften bestimmt.

**Tabelle 1: Gewichtsteile der Komponenten, Bereich der jeweiligen Dosierung und Eigenschaften der hergestellten Formmassen**

| Beispiel* | V-1 | V-2 | V-3 | V-4 | V-5 | 6 | 7 | 8 | V-9 | 10 | 11 |
|---|---|---|---|---|---|---|---|---|---|---|---|
| Gew.-teile | | | | | | | | | | | |
| A-1 | 18,8 | 18,8 | 18,8 | 18,8 | 18,8 | 18,8 | 18,8 | 18,8 | 13,8 | 13,8 | 13,8 |
| B-1 | 41 | 41 | 41 | 41 | 41 | 41 | 41 | 41 | - | - | - |
| B-2 | - | - | - | - | - | - | - | - | 53 | 53 | 53 |
| C-1 | 35 | 35 | 35 | 35 | 35 | 35 | 35 | 28 | 28 | 28 | 23 |
| C-2 | - | - | - | - | - | - | - | 7 | - | - | 5 |
| D-1 | 4,88 | 4,88 | 4,88 | 4,88 | 4,88 | 4,88 | 4,88 | 4,88 | 5 | 5 | 5 |
| E-1 | 0,12 | 0,12 | 0,12 | 0,12 | 0,12 | 0,12 | 0,12 | 0,12 | - | - | - |
| G-1 | 0,2 | 0,2 | 0,2 | 0,2 | 0,2 | 0,2 | 0,2 | 0,2 | 0,2 | 0,2 | 0,2 |

| Bereich der Dosierung | | | | | | | | | | | |
|---|---|---|---|---|---|---|---|---|---|---|---|
| A-1 | 0 | 0 | 0 | 6 | 0 | 0 | 0 | 0 | 0 | 0 | 0 |
| B-1 | 0 | 4 | 6 | 0 | 0 | 0 | 0 | 0 | - | - | - |
| B-2 | - | - | - | - | - | - | - | - | 0 | 0 | 0 |
| C-1 | 0 | 0 | 0 | 0 | 6 | 0 | 0 | 0 | 0 | 0 | 0 |
| C-2 | - | - | - | - | - | - | - | 0 | - | - | 0 |
| D-1 | 0 | 0 | 0 | 0 | 0 | 4 | 6 | 6 | 0 | 6 | 6 |
| E-1 | 0 | 0 | 0 | 0 | 0 | 4 | 6 | 6 | - | - | - |
| G-1 | 0 | 0 | 0 | 0 | 0 | 0 | 0 | 0 | 0 | 0 | 0 |

| Eigenschaften | | | | | | | | | | | |
|---|---|---|---|---|---|---|---|---|---|---|---|
| Vicat B [°C] | 103 | 102 | 102 | 102 | 102 | 102 | 103 | 103 | 115 | 115 | 116 |
| MVI [ml/10'] | 14,9 | 13,5 | 13,8 | 16,5 | 15,7 | 13,4 | 16,4 | 19,3 | 28,1 | 30,1 | 32,1 |
| aₖ, RT [kJ/m²] | 61,1 | 60,2 | 58,2 | 23,2 | 21,1 | 62,2 | 72,9 | 75,1 | 56,3 | 71,2 | 75,1 |
| aₖ,-30°C [kJ/m²] | 14,2 | 13,2 | 12,6 | 8,9 | 9,2 | 13,7 | 17,3 | 18,6 | 14,7 | 18,9 | 19,8 |

| Gesamt-C-Emission | | | | | | | | | | | |
|---|---|---|---|---|---|---|---|---|---|---|---|
| [mg/kg] | 59 | 61 | 63 | 62 | 63 | 51 | 49 | 49 | 41 | 34 | 33 |

| | | | | | | | | | | | |
|---|---|---|---|---|---|---|---|---|---|---|---|
| * mit "V" gekennzeichnete Beispiele sind Vergleichsbeispiele | | | | | | | | | | | |

**Tabelle 2: Gewichtsteile der Komponenten, Bereich der jeweiligen Dosierung und Eigenschaften der hergestellten Formmassen**

| Beispiel* | V-12 | 13 | 14 | 15 | | | | | | | |
|---|---|---|---|---|---|---|---|---|---|---|---|
| Gew.-teile | | | | | | | | | | | |
| A-1 | 18,2 | 18,2 | 18,2 | 18,2 | | | | | | | |
| B-1 | - | - | - | - | | | | | | | |
| B-2 | 36,6 | 36,6 | 36,6 | 36,6 | | | | | | | |
| C-1 | 32 | 32 | 32 | 27 | | | | | | | |
| C-2 | - | - | - | 5 | | | | | | | |
| D-1 | 5 | 5 | 5 | 5 | | | | | | | |
| F-1 | 8 | 8 | 8 | 8 | | | | | | | |
| G-1 | 0,2 | 0,2 | 0,2 | 0,2 | | | | | | | |

| Bereich der Dosierung | | | | | | | | | | | |
|---|---|---|---|---|---|---|---|---|---|---|---|
| A-1 | 0 | 0 | 0 | 0 | | | | | | | |
| B-1 | - | - | - | - | | | | | | | |
| B-2 | 0 | 0 | 0 | 0 | | | | | | | |
| C-1 | 0 | 0 | 0 | 0 | | | | | | | |
| C-2 | - | - | - | 0 | | | | | | | |
| D-1 | 0 | 4 | 6 | 6 | | | | | | | |
| F-1 | 6 | 6 | 6 | 6 | | | | | | | |
| G-1 | 0 | 0 | 0 | 0 | | | | | | | |

| Eigenschaften | | | | | | | | | | | |
|---|---|---|---|---|---|---|---|---|---|---|---|
| Vicat B [°C] | 110 | 110 | 111 | 111 | | | | | | | |
| MVI [ml/10'] | 4,2 | 3,9 | 3,8 | 3,6 | | | | | | | |
| aₖ, RT [kJ/m²] | 8,5 | 12,1 | 12,5 | 13,1 | | | | | | | |
| aₙ,RT [kJ/m²] | 46 | 54 | 56 | 58 | | | | | | | |

| Gesamt-C-Emission | | | | | | | | | | | |
|---|---|---|---|---|---|---|---|---|---|---|---|
| [mg/kg] | 54 | 43 | 42 | 43 | | | | | | | |

| | | | | | | | | | | | |
|---|---|---|---|---|---|---|---|---|---|---|---|
| * mit "V" gekennzeichnete Beispiele sind Vergleichsbeispiele | | | | | | | | | | | |

Obwohl die Verweilzeit des Verträglichkeitsvermittlers, Komponente D, während des Mischvorgangs im Extruder gegenüber bekannten Verfahren deutlich verringert ist, weisen die nach den erfindungsgemäßen Verfahren herstellbaren thermoplastischen Formmassen gegenüber bekannten Formmassen auf Basis schlagzähmodifizierter (Methyl)Styrol-Acrylnitril-Copolymere und Polyamide eine weiter verbesserte Schlagzähigkeit und/oder einen geringeren Anteil flüchtiger Komponenten auf.

## Patentansprüche

1. Verfahren zur Herstellung von thermoplastischen Formmassen, wobei die thermoplastischen Formmassen enthalten
a) 3 bis 79 Gew.-% eines oder mehrerer (Methyl)Styrol-Acrylnitril-Copolymere, die keine von Maleinsäureanhydrid abgeleiteten Einheiten aufweisen, als Komponente A,
b) 15 bis 91 Gew.-% eines oder mehrerer Polyamide als Komponente B,
c) 5 bis 50 Gew.-% eines oder mehrerer Kautschuke als Komponente C,
d) 1 bis 25 Gew.-% eines oder mehrerer Verträglichkeitsvermittler als Komponente D,
e) 0 bis 2 Gew.-% einer oder mehrerer niedermolekularer Verbindungen, die eine Dicarbonsäureanhydridgruppe enthalten, als Komponente E,
f) 0 bis 50 Gew.-% eines oder mehrerer faser- oder teilchenförmiger Füllstoffe als Komponente F und
g) 0 bis 40 Gew.-% weitere Zusatzstoffe als Komponente G,
wobei die Gew.-% jeweils auf das Gesamtgewicht der Komponenten A bis G bezogen sind und zusammen 100 Gew.-% ergeben,
durch Schmelzevermischung der Komponenten A bis G,
**dadurch gekennzeichnet, dass** in einem Schneckenextruder, der entlang der Förderrichtung in dieser Reihenfolge mindestens eine Dosierzone, eine Plastifizierzone, eine Homogenisierzone und eine Austragszone umfasst, nach Zugabe der Komponenten A, B und C in die Dosierzone in einem ersten Verfahrensschritt in Abwesenheit von Komponente D eine Schmelze erzeugt wird, und in einem zweiten Verfahrenschritt nach Zugabe der Komponente D in die Homogenisierzone das Einmischen der Komponente D in diese Schmelze durchgeführt wird.

2. Verfahren nach Anspruch 1, **dadurch gekennzeichnet, dass** Komponente C einen Butadienpfropfkautschuk und/oder einen Alkylacrylatpfropfkautschuk umfaßt.

3. Verfahren nach Ansprüchen 1 bis 2, **dadurch gekennzeichnet, dass** Komponente D ein oder mehrere (Methyl)Styrol-Acrylnitril-Copolymere umfaßt, die, bezogen auf die gesamte Komponente D, 0,5 bis 5 Gew.-% von Maleinsäureanhydrid abgeleitete Einheiten aufweisen.

4. Verfahren nach Ansprüchen 1 bis 3, **dadurch gekennzeichnet, dass** Komponente E Maleinsäureanhydrid, Phthalsäureanhydrid, Trimellitsäureanhydrid oder ein Gemisch dieser Anhydride umfaßt.

5. Verfahren nach Ansprüchen 1 bis 4, **dadurch gekennzeichnet, dass** Komponente E Phthalsäureanhydrid umfaßt.

6. Verfahren nach Ansprüchen 1 bis 5, **dadurch gekennzeichnet, dass** in einem Schneckenextruder mit der Baulänge L, wobei die Baulänge L definiert ist als die Strecke beginnend bei der ersten Dosiereinrichtung für die Zugabe der Komponenten A, B und/oder C und in Förderrichtung endend bei der Austrittsöffnung, nach Zugabe der Komponenten A, B und C im Bereich von 0 L bis 0,15 L in einem ersten Verfahrensschritt in Abwesenheit von Komponente D eine Schmelze erzeugt wird, und in einem zweiten Verfahrenschritt nach Zugabe der Komponente D im Bereich von 0,3 L bis 0,99 L das Einmischen der Komponente D in diese Schmelze durchgeführt wird.

7. Thermoplastische Formmasse, herstellbar gemäß Verfahren nach Ansprüchen 1 bis 6.

8. Verwendung von thermoplastischen Formmassen nach Anspruch 7 zur Herstellung von Formkörpern, Folien oder Fasern.

9. Formkörper, Fasern oder Folien, enthaltend thermoplastische Formmassen nach Anspruch 7.

## Claims

1. A process for producing thermoplastic molding compositions, where the thermoplastic molding compositions comprise
a) as component A, from 3 to 79% by weight of one or more (methyl)styrene-acrylonitrile copolymers, which have no maleic-anhydride-derived units,
b) as component B, from 15 to 91% by weight of one or more polyamides,
c) as component C, from 5 to 50% by weight of one or more rubbers,
d) as component D, from 1 to 25% by weight of one or more compatibilizers,
e) as component E, from 0 to 2% by weight of one or more low-molecular-weight compounds which comprise a dicarboxylic anhydride group,
f) as component F, from 0 to 50% by weight of one or more fibrous or particulate fillers, and
g) as component G, from 0 to 40% by weight of further additives,
where each of the % by weight values is based on the total weight of components A to G, and these give a total of 100% by weight,
via mixing of components A to G in the melt,
which comprises, in a screw extruder comprising, in this sequence along the direction of conveying, at least one feed zone, one plastifying zone, one homogenizing zone, and one discharge zone, after addition of components A, B, and C to the feed zone, producing a melt in a first step of the process, in the absence of component D, and, in a second step of the process, after addition of component D to the homogenizing zone, carrying out the mixing to incorporate component D into said melt.

2. The process according to claim 1, wherein component C comprises a butadiene graft rubber and/or an alkyl acrylate graft rubber.

3. The process according to claims 1 to 2, wherein component D comprises one or more (methyl)styrene-acrylonitrile copolymers which, based on the entirety of component D, have from 0.5 to 5% by weight of maleic-anhydride-derived units.

4. The process according to claims 1 to 3, wherein component E comprises maleic anhydride, phthalic anhydride, trimellitic anhydride, or a mixture of said anhydrides.

5. The process according to claims 1 to 4, wherein component E comprises phthalic anhydride.

6. The process according to claims 1 to 5, wherein a melt is produced in a screw extruder with effective length L, where the effective length L is defined as the distance from the first feed device for the addition of components A, B, and/or C to the discharge aperture in the direction of conveying, after addition of components A, B, and C, in the region from 0 L to 0.15 L, in a first step of the process, in the absence of component D, and, in a second step of the process, after addition of component D, in the region from 0.3 L to 0.99 L, the mixing to incorporate component D into said melt is carried out.

7. A thermoplastic molding composition, capable of production by a process according to claims 1 to 6.

8. The use of thermoplastic molding compositions according to claim 7 for producing moldings, foils, or fibers.

9. A molding, fiber, or film, comprising thermoplastic molding compositions according to claim 7.

## Revendications

1. Procédé pour la préparation de masses de moulage thermoplastiques, les masses de moulage thermoplastiques contenant
a) 3 à 79% en poids d'un ou de plusieurs copolymères de (méthyl)styrène-acrylonitrile, qui ne présentent pas d'unités dérivées de l'anhydride de l'acide maléique, comme composant A,
b) 15 à 91% en poids d'un ou de plusieurs polyamides comme composant B,
c) 5 à 50% en poids d'un ou de plusieurs caoutchoucs comme composant C,
d) 1 à 25% en poids d'un ou de plusieurs promoteurs de compatibilité comme composant D,
e) 0 à 2% en poids d'un ou de plusieurs composés de bas poids moléculaire, qui contiennent un groupe anhydride d'un acide dicarboxylique comme composant E,
f) 0 à 50% en poids d'une ou de plusieurs charges sous forme de fibres ou de particules comme composant F et
g) 0 à 40% en poids d'autres additifs comme composant G,
les % en poids se rapportant à chaque fois au poids total des composants A à G et valant ensemble 100% en poids,
par mélange en masse fondue des composants A à G, **caractérisé en ce qu'**une masse fondue est produite, dans une première étape de procédé, dans une extrudeuse à vis sans fin qui comprend, le long du sens du transport, dans l'ordre, au moins une zone de dosage, une zone de plastification, une zone d'homogénéisation et une zone d'évacuation, après addition des composants A, B et C dans la zone de dosage en l'absence du composant D,
et dans une deuxième étape de procédé, après l'addition du composant D dans la zone d'homogénéisation, on réalise le mélange du composant D dans cette masse fondue.

2. Procédé selon la revendication 1, **caractérisé en ce que** le composant C comprend un caoutchouc greffé de butadiène et/ou un caoutchouc greffé d'acrylate d'alkyle.

3. Procédé selon les revendications 1 à 2, **caractérisé en ce que** le composant D comprend un ou plusieurs copolymères de (méthyl)styrène-acrylonitrile, qui, par rapport à la totalité du composant D, présente(nt) 0,5 à 5% en poids d'unités dérivées d'anhydride de l'acide maléique.

4. Procédé selon les revendications 1 à 3, **caractérisé en ce que** le composant E comprend de l'anhydride de l'acide maléique, de l'anhydride de l'acide phtalique, de l'anhydride de l'acide trimellitique ou un mélange de ces anhydrides.

5. Procédé selon les revendications 1 à 4, **caractérisé en ce que** le composant E comprend de l'anhydride de l'acide phtalique.

6. Procédé selon les revendications 1 à 5, **caractérisé en ce que** dans une extrudeuse à vis sans fin, présentant la longueur de construction L, cette longueur de construction L étant définie comme la zone commençant au premier dispositif de dosage pour l'addition des composants A, B et/ou C et se terminant dans le sens du transport à l'ouverture de sortie, après l'addition des composants A, B et C dans la zone de 0 L à 0,15 L, dans une première étape de procédé, une masse fondue est produite en l'absence du composant D et, dans une deuxième étape de procédé, après l'addition du composant D dans la zone de 0,3 L à 0,99 L, le mélange du composant D dans cette masse fondue est réalisé.

7. Masse de moulage thermoplastique, pouvant être préparée selon les procédés selon les revendications 1 à 6.

8. Utilisation de masses de moulage thermoplastiques selon la revendication 7 pour la fabrication de corps moulés, de feuilles ou de fibres.

9. Corps moulés, fibres ou feuilles contenant des masses de moulage thermoplastiques selon la revendication 7.
